# EUROPEAN PATENT SPECIFICATION

(11) **EP 3 886 202 B1**
(45) Date of publication and mention of the grant of the patent: **19.02.2025**
(21) Application number: 20166297.0
(22) Date of filing: 27.03.2020
(51) Int. Cl.: H01M 10/04, H01M 10/42, H01M 10/48

(54) **FLUID SPRING PRESSURIZED BATTERY STACK**
FLUIDFEDER-DRUCKBATTERIESTAPEL
PILE DE BATTERIE SOUS PRESSION À RESSORT FLUIDE

(43) Date of publication of application: 29.09.2021
(73) Proprietor: Samsung SDI Co., Ltd., Gyeonggi-do (KR)
(72) Inventor: Golubkov, Andrej, 8010 Graz (AT)
(74) Representative: Gulde & Partner

(56) References cited:
- EP-A1- 3 121 868
- WO-A1-2019/017994
- US-A1- 2019 229 364

## Description

### Field of the Invention

The present invention relates to a battery system or battery module comprising a stack of battery cells, wherein one or several fluid springs are integrated into the stack of battery cells to allow for a control of the pressure exerted on the battery cells of the stack. In one alternative of the invention, the one or several fluid springs comprise an elastic device providing a maximum pressure, even when the fluid in the fluid springs is not pressurized (i. e., when the pressure of the fluid in a fluid spring equals the pressure of the ambient air). The pressure exerted by the fluid springs on the adjacent battery cells is controlled by an adjustable underpressure of the fluid in the fluid springs. In a further alternative of the invention, the fluid pressure in the fluid springs is decreased, when a safety critical situation such as a crash of the vehicle or a thermal runaway in the battery system is detected. The present invention further relates to methods for operating the afore-described battery system or battery module. Also, the invention is related to a battery pack comprising the battery system and to a vehicle including a battery pack or a battery system as defined above.

### Technological Background

In the recent years, vehicles for transportation of goods and peoples have been developed using electric power as a source for motion. Such an electric vehicle is an automobile that is propelled by an electric motor, using energy stored in rechargeable batteries. An electric vehicle may be solely powered by batteries or may be a form of hybrid vehicle powered by for example a gasoline generator. Furthermore, the vehicle may include a combination of electric motor and conventional combustion engine. In general, an electric-vehicle battery (EVB) or traction battery is a battery used to power the propulsion of battery electric vehicles (BEVs). Electric-vehicle batteries differ from starting, lighting, and ignition batteries because they are designed to give power over sustained periods of time. A rechargeable or secondary battery differs from a primary battery in that it can be repeatedly charged and discharged, while the latter provides only an irreversible conversion of chemical to electrical energy. Low-capacity rechargeable batteries are used as power supply for small electronic devices, such as cellular phones, notebook computers and camcorders, while high-capacity rechargeable batteries are used as the power supply for hybrid vehicles and the like.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g. cylindrical or rectangular, depends on the battery's intended purpose. Lithium-ion (and similar lithium polymer) batteries, widely known via their use in laptops and consumer electronics, dominate the most recent group of electric vehicles in development.

As an alternative to electrolyte solutions as described above, solid state cells can be employed in a battery. A solid state battery can be defined via the following characteristics. The principal difference between a conventional Li-ion cell and an all solid state Li-ion cell is that the later contains no liquid electrolyte. Instead, the electrolyte is a solid state electrolyte. The solid state electrolyte may be a ceramic (e. g., sulfides, oxides, phosphates) or solid polymer (e. g., polyethylene oxide (PEO)), or a polymer gel (e. g. poly(vinylidenefluoride)-hexafluoropropylene (PVdF(HFP))).

The cathode material deployed in a solid-state may be same as in conventional Li-ion batteries. However, the cathode particles are not soaked with liquid electrolyte but embedded in the solid electrolyte matrix. Further, the anode of a solid state cell differs from the anode of a conventional Li-ion cell. In a conventional cell, the anode is composed of Graphite or silicon particles. In a solid state cell, however, the anode comprises a thin Li-metal film. Moreover, a solid state cell has no dedicated separator. The solid electrolyte acts as a separator (thus the solid state electrolyte is *not* electrically conductive).

Rechargeable batteries may be used as a battery module formed of a plurality of unit battery cells coupled in series and/or in parallel so as to provide a high energy density, in particular for motor driving of a hybrid vehicle. That is, the battery module is formed by interconnecting the electrode terminals of the plurality of unit battery cells depending on a required amount of power and in order to realize a high-power rechargeable battery.

A battery pack is a set of any number of (preferably identical) battery modules. They may be configured in a series, parallel or a mixture of both to deliver the desired voltage, capacity, or power density. Components of battery packs include the individual battery modules, and the interconnects, which provide electrical conductivity between them.

The mechanical integration of such a battery pack requires appropriate mechanical connections between the individual components, e. g. of battery modules, and between them and a supporting structure of the vehicle. These connections must remain functional and save during the average service life of the battery system. Further, installation space and interchangeability requirements must be met, especially in mobile applications.

Mechanical integration of battery modules may be achieved by providing a carrier framework and by positioning the battery modules thereon. Fixing the battery cells or battery modules may be achieved by fitted depressions in the framework or by mechanical interconnectors such as bolts or screws. Alternatively, the battery modules are confined by fastening side plates to lateral sides of the carrier framework. Further, cover plates may be fixed atop and below the battery modules.

The carrier framework of the battery pack is mounted to a carrying structure of the vehicle. In case the battery pack shall be fixed at the bottom of the vehicle, the mechanical connection may be established from the bottom side by for example bolts passing through the carrier framework of the battery pack. The framework is usually made of aluminum or an aluminum alloy to lower the total weight of the construction. Also, the framework may be made of a steel alloy for improved safety and robustness.

Battery systems according to the prior art, despite any modular structure, usually comprise a battery housing that serves as enclosure to seal the battery system against the environment and provides structural protection of the battery system's components. Housed battery systems are usually mounted as a whole into their application environment, e.g. an electric vehicle. Thus, the replacement of defect system parts, e. g. a defect battery submodule, requires dismounting the whole battery system and removal of its housing first. Even defects of small and/or cheap system parts might then lead to dismounting and replacement of the complete battery system and its separate repair. As high-capacity battery systems are expensive, large and heavy, said procedure proves burdensome and the storage, e. g. in the mechanic's workshop, of the bulky battery systems becomes difficult.

For meeting the dynamic power demands of various electrical consumers connected to the battery system a static control of battery power output and charging is not sufficient. Thus, steady exchange of information between the battery system and the controllers of the electrical consumers is required. This information includes the battery systems actual state of charge (SoC), potential electrical performance, charging ability and internal resistance as well as actual or predicted power demands or surpluses of the consumers.

Battery systems usually comprise a battery management system (BMS) and/or battery management unit (BMU) for processing the aforementioned information. The BMS/BMU may communicate to the controllers of the various electrical consumers via a suitable communication bus, e.g. a SPI or CAN interface. The BMS/BMU may further communicate with each of the battery submodules, particularly with a cell supervision circuit (CSC) of each battery submodule. The CSC may be further connected to a cell connection and sensing unit (CCU) of a battery submodule that interconnects the battery cells of the battery submodule.

Thus, the BMS/BMU is provided for managing the battery pack, such as by protecting the battery from operating outside its safe operating area, monitoring its state, calculating secondary data, reporting that data, controlling its environment, authenticating it and/or balancing it.

To provide thermal control of the battery pack a thermal management system is required to safely use the at least one battery module by efficiently emitting, discharging and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein and thus charging and discharging performance of the rechargeable deteriorates and the life-span of the rechargeable battery is shortened. Thus, cell cooling for effectively emitting/discharging/ dissipating heat from the cells is required.

As already indicated above, most automotive lithium-ion (Li-ion) battery packs used (i. e. battery packs employed in electric vehicles or hybrid vehicles) consist of several battery modules. A typical automotive battery module (in the following also simply referred to as "module") consists of several stacked cells. To achieve a desired capacity and voltage of the module, busbars connect the cells electrically in series or in parallel. The modules may be further connected in series, until the desired system voltage of the battery pack is reached.

To reduce ageing, the stack of a module - and thus each of the battery cells comprised in this stack - is pressed with a mechanical pressure (e. g. 100 kPa). Solid state battery cells (cf. above for a definition of which) need even higher mechanical pressures (typically in the range of 2 MPa to 3 MPa) for operation.

However, the battery cells (in the following also simply referred to as "cells") may expand during charging and shrink during discharge (e. g. by 5 %), leading in particular to a change of the thickness of the cells. In addition to reversible thickness change during the charge/discharge, the thickness of the cell is superimposed by slow irreversible swelling due to ageing of the electrode materials.

As the cells of the battery module are arranged as a stack, the change of the thickness of cells results in a dimensional change of the stack. The stack, however, is typically accommodated in a carrier framework or pack frame (see above) with confined dimensions, the carrier framework thus acting as a restrainer, which imposes a mechanical restraining on the stack and the cells comprised in the stack. Hence, the expansion or shrink of the battery cells affects the pressure, which the battery cells exert to one another in the stack. Accordingly, the dimensional change of the stack creates different stresses on the mechanical restraining of the stack and on the cells. The change of stress depends on the stiffness of the cells and restrainer; the relation between stress change and the stiffness of the cells as well as of the restrainer being describable, in good approximation, by Hook's law.

However, it reveals disadvantageous that (a) the stress cannot be actively controlled or adjusted after the stack is assembled and (b) the mechanical pressure is not constant over the lifetime of the battery.

One possibility to control the stress on the cells used in the state of the art is to apply the pressure by means of flat pressure plates, e. g., end plates arranged in front of the first cell and after the last cell of the stack. However, when high force is applied, then those plates may bend and the resulting pressure on the outermost cell or cells becomes non-uniform. Non-uniform pressure, however, reduces the performance of the cell-stack in particular with regard to safety and/or ageing. The afore-described disadvantages are especially pronounced in stacks with solid state cells, which require even higher pressures during operation (see above).

A possibility to gain improved control over the pressure prevailing in the stack of battery cells is the integration of fluid springs such as air springs or air cushions in the stack of cells. The pressure of the fluid within the fluid springs can be controlled externally, which allows for an adaption of the overall-pressure exerted on the cells in the stack.

One disadvantage of the use of simple fluid springs is that the fluid pressure in a fluid spring has to be actively maintained over the whole lifetime of the battery module, e. g., by means of compressors. On the one hand, this is energy-intensive due to the constantly required electric power consumption of the compressors. On the other hand, the compressors must be capable to provide at least the required pressures needed in the battery stack (see above). Also, in case of a thermal event (such as a thermal runaway) in a cell in the stack, the heat transfer of the affected cell to the adjacent cells may be that large that even when the cells are cooled by a cooling system, the adjacent cells absorb more heat than can be discharged by the cooling system, which often results in infecting the neighbored cells with the thermal runaway, i. e. a thermal runaway arises in the adjacent cells as well.

Thus, there is a need to provide a battery module or battery system that allows for an active control over the pressure exerted on the cells in a battery module, but at the same time reduces the demands or requirements as to the energy / power consumption and as to the layout (with regard to strength and/or power of the provided pressure) of the means used for controlling the pressure in the fluid springs. Also, there is a need to provide a battery module or battery system that avoids or at least decreases the risk that a thermal runaway occurring in a cell of the battery system propagates to adjacent cells.

WO 2019/017994 A1 provides apparatuses and methods useful for managing pressure in electrochemical devices.

It is thus an object of the present invention to overcome or reduce at least some of the drawbacks of the prior art and to provide a battery system that allows for an active control over the pressure exerted on the cells in a battery module, but at the same time reduces the demands or requirements as to the energy / power consumption and as to the layout (with regard to strength and/or power of the provided pressure) of the means used for controlling the pressure in the fluid springs. It is also an object of the present invention to provide a battery module or battery system that avoids or at least decreases the risk that a thermal runaway occurring in a cell of the battery system propagates to adjacent cells. These objects are achieved by the battery system (battery module) and by the method for operating said battery system as disclosed by the independent claims.

### Summary of Invention

This invention provides a battery system, a method for operating a battery system, a battery pack and a vehicle as defined in independent claims 1, 8, 11 and 12, respectively. Preferred embodiments are defined in dependent claims 2-7, 9 and 10.

Embodiments of the present disclosure seek to solve at least one of the problems existing in the prior art to at least some extent. In particular, a battery system or battery module for use in a vehicle is provided comprising: a stack comprising a plurality of battery cells being stacked along a virtual reference axis; a pack frame comprising a first end plate and a second end plate; one or more fluid springs configured for holding a fluid; one or more fluid pressure adjusting means for adjusting a fluid pressure within at least one fluid spring; and a control unit configured for controlling the one or more fluid pressure adjusting means. The stack is placed between the first end plate and the second endplate. Each of the one or more fluid springs is positioned between the first endplate and the second end plate, and is configured for exerting a pressure on at least one of the battery cells in a direction along the reference axis. Each of the fluid pressure adjusting means is connected to one or more fluid springs.

In the battery system according to the invention, the control unit is configured for receiving a safety check signal indicating a negative acceleration from at least one safety check sensor comprising an acceleration sensor configured to detect a negative acceleration with an absolute acceleration value equal to or larger than a predefined positive value. The control unit is further configured for evaluating, whether one or more received safety check signal(s), which indicate a negative acceleration, may indicate a safety critical situation, and for operating, upon evaluation that the safety check signal(s) indicating a negative acceleration may indicate a safety critical situation, the fluid pressure adjusting means such that the fluid pressure in the fluid springs is decreased.

Further disclosed herein, as an example, is an alternative battery system, wherein at least one of the fluid springs comprises an elastic device. The elastic device may be foam. Each of the fluid pressure adjusting means being connected to one or more fluid springs comprising an elastic device is configured to generate or to adjust, when the one or more connected fluid springs each hold a fluid, an pressure in the fluid within the connected fluid springs, wherein the pressure is smaller than or at maximum equal to the pressure of the ambient atmosphere.

Note that the expression "a battery cell placed next to an end plate" does not exclude that another different element such as a fluid spring is placed between the battery cell and the end plate.

Further, the term "pressure" as used throughout this document shall refer to mechanical contact pressure, wherein the mechanical contact pressure may be caused by an immediate contact between two elements or immediately, i. e., the pressure is transferred from one element to another element via one or more intermediate elements.

The term "underpressure" of the fluid of a fluid spring shall refer, here and throughout the whole document, to a range of pressures being smaller than the pressure of the ambient atmosphere of the fluid spring or at maximum equal to the pressure of the ambient atmosphere of the fluid spring. The pressure of the ambient atmosphere of the fluid spring typically corresponds to the pressure of the ambient air of the battery system.

The actual pressure exerted from a fluid spring to the one or two adjacent battery cells corresponds, of course, from the (anti-)pressure exerted from the adjacent cells on the fluid spring. Thus, if a fluid spring is filled with a certain amount of fluid, the pressure provided by this fluid spring depends on the situation, and in particular on the space left for the fluid spring between two elements (e. g., cells) adjacent to the fluid spring along the reference axis.

The expression "may indicate a safety critical situation" may in particular denote that the evaluation of the safety check signal(s) performed by the control unit, a probability or likeness for a safety critical event in the vehicle or of the vehicle is estimated, and the measured / received safety check signal(s) are classified as safety critical, if said probability or likeness exceeds a predefined value, e. g., 50 %, 80 %, or 90 %. Further, the term "safety critical situation" shall refer to each event that bears a risk for the vehicle itself and/or the passengers/driver of the vehicle.

The acceleration sensor acts as a crash sensor. The acceleration sensor detects and, upon detection, sends a safety check signal to the connected control unit- negative accelerations of the vehicle (or, equivalently, of the battery system employed in the vehicle) equal to or below -90 m / s², or, in other words, detect a negative acceleration with an absolute value equal to or larger than +90 m / s². Of course, the acceleration sensor may also send, e. g., in predefined time intervals, the measured acceleration independent from its value, and the control unit evaluates whether or not the measured acceleration or acceleration pattern may indicate a crash of the vehicle. The term "acceleration pattern" may refer in this context to the function of the measured acceleration values plotted over the last M acceleration measurement times (with, e. g., M = 4).

In one embodiment, the elastic device has a predefined Young's modulus. The Young's modulus may be a temperature dependent function. In addition, the Young's modulus may also be a function depending on a spatial position. Preferably, the Young's modulus is chosen so as to be constant over the entire extend of the elastic device in a plane perpendicular to the reference direction.

According to one embodiment of the battery system, the stack is placed between the first end plate and the second endplate such that the first battery cell of the stack is, when viewed along the reference axis, positioned next to the first end plate and the last battery cell of the stack is, when viewed along the reference axis, positioned next to the second end plate.

The battery system may further comprise at least one fluid pressure sensor configured to measure a fluid pressure being present in at least one of the fluid springs; wherein the control unit is configured for receiving a pressure signal corresponding to the pressure being measured from each of the fluid pressure sensors; and wherein the control unit is further configured to control, dependent on the one or more received pressure signals, the one or more fluid pressure adjusting means.

The control unit may be configured to detect, from the pressure signal provided from each of the fluid pressure sensors, a pressure change in the fluid of the fluid springs to which the fluid pressure sensors are connected. Also, the control unit is further configured to control at least one of the fluid pressure adjusting means such that upon detection of a pressure increase by at least one of the fluid pressure sensors, the fluid adjusting pressure means decreases the pressure of fluid within the fluid springs connected to the respective fluid adjusting pressure means.

In other words, upon occurrence of a pressure increase in the stack, the underpressure is increased (i. e., the pressure is decreased), resulting in a decrease of the overall-pressure composed of the pressure caused by the elastic device and the pressure within the fluid. If in the initial state, no underpressure of the fluid has been present in the respective fluid spring (i. e., the fluid pressure has been equal to the pressure of the ambient atmosphere or has been even higher), an underpressure (i. e., a pressure lower or than or equal to the pressure of the ambient atmosphere) is being generated in the fluid after the detection of a pressure increase in the stack.

The relation between the measured pressure increase and the pressure decrease in the fluid spring(s) triggered as a response to the measured pressure increase may be linear.

Note that the expression "pressure change" shall encompass, in this context, both, the case of a pressure increase and the case of a pressure decrease.

According to the present disclosure, the control unit is configured to control at least one of the fluid pressure adjusting means such that, upon detection of a pressure decrease by at least one of the fluid pressure sensors, the fluid adjusting pressure means increases the pressure of fluid within the fluid springs connected to the respective fluid adjusting pressure means.

This may require that, upon detection of a pressure decrease, the pressure prevailing in the fluid spring(s) is already an underpressure.

The relation between the measured pressure decrease and the pressure increase in the fluid spring(s) triggered as a response to the measured pressure increase may be linear, at least up to a pressure equal to the pressure of the ambient atmosphere.

According to another aspect of the present disclosure, at least one of the fluid springs is placed, viewed along the reference axis, between two adjacent battery cells. Specifically, the battery system may comprise only a single fluid spring in this case.

According to another aspect of the present disclosure, if the number of battery cells in the stack is N and N is an even integer, one of the fluid springs is placed between the (N / 2)-th and the (N / 2 + 1)-th battery cell, or, if the number of battery cells in the stack is N and N is an odd integer, one of the fluid springs is placed between the ((N - 1) / 2)-th and the ((N + 1) / 2)-th battery cell, wherein the battery cells are counted from the first battery cell to the last battery cell in the stack. Specifically, the battery system may comprise only a single fluid spring in this case.

In one embodiment of the battery system according to the invention, one fluid spring is placed between the first end plate and the first battery cell of the stack; and a further fluid spring is placed between the second end plate and the last battery cell of the stack. Specifically, the battery system may comprise only two fluid springs in this case.

According to another aspect of the present disclosure, at least one positioning plate is placed, viewed along the reference axis, between two adjacent battery cells. Specifically, the battery system may comprise only a single positioning plate in this case.

According to another aspect of the present disclosure, if the number of battery cells in the stack is N and N is an even integer, one of the positioning plates is placed between the (N / 2)-th and the (N / 2 + 1)-th battery cell, or if the number of battery cells in the stack is N and N is an odd integer, one of the positioning plates is placed between the ((N - 1) / 2)-th and the ((N + 1) / 2)-th battery cell, wherein the battery cells are counted from the first battery cell to the last battery cell in the stack. Specifically, the battery system may comprise only a single positioning plate in this case.

According to another aspect of the present disclosure, each of the fluid springs are in fluid communication with each other. This embodiment has the advantage that a single fluid adjusting pressure means is sufficient to control each of the fluid springs, and the underpressure of the fluid within the fluid springs is equal for each of the fluid springs.

The fluid may be a non-compressible fluid or a compressible fluid. The non-compressible fluid may be air.

According to another aspect of the present disclosure, at least one of the fluid pressure adjusting means comprises a vacuum pump, a valve or a compressor.

According to another aspect of the present disclosure, at least one fluid pressure sensor is connected to one or more of the fluid springs.

According to another aspect of the present disclosure, the battery cells are solid state battery cells.

According to another aspect of the present disclosure, each of the battery cells has a prism-shaped geometry or a cylindrical geometry, wherein the base areas extend perpendicular to the reference axis.

According to another aspect of the present disclosure, each of the fluid springs has a prism-shaped geometry or a cylindrical geometry, wherein the base areas extend perpendicular to the reference axis; and each of the fluid springs is positioned such that for each battery cell being in contact with that fluid cell, the entire base area of that battery cell is in contact with the adjacent base area of the fluid spring. This has the advantage that, for each of the fluid springs, a pressure is provided from the fluid spring on the entire adjacent areas of the adjacent battery cells, i. e., pressure is exerted to each point of the adjacent area of each battery cell adjacent to the fluid spring.

According to another aspect of the present disclosure, the control unit is integrated into the BMU or BMS of the battery system or the battery pack comprising the battery system.

According to another aspect of the present disclosure, at least one safety check sensor comprises a temperature sensor configured to measure the temperature of the stack of battery cells or to measure the temperature of at least one of the battery cells comprised in the stack; and the control unit evaluates, whether or not the temperature or temperature pattern measured by at least one temperature sensor may indicate a safety critical thermal event such as a thermal runaway.

The term "temperature pattern" may refer in this context to the function of the measured temperature values plotted over the last M temperature measurement times (with, e. g., M = 4).

In one embodiment of the battery system, at least one safety check sensor comprises a cell voltage sensor configured for measuring the voltage or voltage pattern over one or more cells of the battery system.

The term "voltage pattern" may refer in this context to the function of the measured voltage values plotted over the last M voltage measurement times (with, e. g., M = 4).

In one embodiment of the battery system, at least one safety check sensor comprises a current sensor configured for measuring the current or current pattern produced by the battery system or at least by one cell of the battery system.

The term "current pattern" may refer in this context to the function of the measured current values plotted over the last M current measurement times (with, e. g., M = 4).

In one embodiment of the battery system, at least one safety check sensor comprises an insulation monitor.

According to another aspect of the present disclosure, the battery management unit (BMU) of the battery system detects a safety critical state of the battery pack / battery system by combining and processing at least two of the following signals: cell voltages, cell temperatures, system current, gas pressure in the battery system, gas temperature in the battery system.

Further disclosed herein as an example is a method for operating a battery system according to the invention, the method comprising the steps of:
a) generating, in the fluid of at least one of the fluid springs, a pressure being smaller than or at maximum equal to the pressure of the ambient atmosphere;
b) adjusting the fluid pressure of at least one of the fluid springs in accordance to a state of at least one of the battery cells, wherein the fluid pressure is adjusted so as to be a pressure being smaller than or at maximum equal to the pressure of the ambient atmosphere.

Step a) also encompasses the case of keeping an (under)pressure of 0 Pa in a fluid spring, i. e., the case that the pressure within the fluids spring equals the pressure of the ambient atmosphere; see the definition of the term "underpressure" as given above. In other words, step a) sets or defines an initial underpressure in at least one of the fluid springs. Preferably, in step b), the fluid pressure of the fluid springs is adjusted, at any time, so as to be equal for each of the fluid springs.

In one embodiment of the method, step b) is repeated continuously or within predefined time intervals or when triggered by predefined events.

In one embodiment of the method, the state of at least one of the battery cells depends on the age of the at least one battery cell; and step b) comprises reducing the fluid pressure of at least one of the fluid springs, as the age of the battery cells increases.

Note in this context that the expression "reducing the fluid pressure" shall refer to an increase of the underpressure. In other words, the absolute pressure within the fluid reduces, as the underpressure increases.

In one embodiment of the method, the state of at least one of the battery cells depends on a charging or discharging condition of the at least one battery cell.

In one embodiment of the method, step b) comprises reducing the fluid pressure of at least one of the fluid springs, as the battery cells are in a charging condition; and step b) comprises raising the fluid pressure of at least one of the fluid springs, as the battery cells are in a discharging condition.

A further aspect of the invention relates to a method for operating a battery system, comprising the steps of:
a) adjusting a pressure in the fluid of at least one of the fluid springs;
b) checking, by the control unit, whether a safety check signal has been received from at least one safety check sensor, the safety check sensor comprising an acceleration sensor configured to detect a negative acceleration with an absolute acceleration value equal to or larger than a predefined positive value;
c) evaluating, by the control unit, whether the received safety check signals may indicate a safety critical situation; and
d) operating, by the control unit upon evaluation that the safety check signal(s) may indicate a safety critical situation, the fluid pressure adjusting means such that the fluid pressure in the fluid springs is decreased.

According to one embodiment of the method, step b) comprises: If at least one safety check sensor comprises an acceleration sensor: checking, whether the received safety check signals from at least one of the acceleration sensors indicate a negative acceleration with an absolute acceleration value equal to or larger than a predefined positive value. Also, if at least one safety check sensor comprises a thermal sensor configured to measure the temperature of the stack of battery cells or to measure the temperature of at least one of the battery cells comprised in the stack, step b) may comprise: evaluating, whether or not the temperature or temperature pattern measured by at least one temperature sensor may indicate a safety critical thermal event such as a thermal runaway. Also, if at least one safety check sensor comprises a cell voltage sensor configured for measuring the voltage over at least one cell of the battery system, step b) may comprise: evaluating, whether or not the voltage or voltage pattern measured by at least one cell voltage sensor may indicate a safety critical event. Also, if at least one safety check sensor comprises a current sensor configured for measuring the current produced by the battery system or at least by one cell of the battery system, step b) may comprise: evaluating, whether or not the current or current pattern measured by at least one current sensor may indicate a safety critical event. Also, if at least one safety check sensor comprises an insulation sensor, step b) may comprise: evaluating, whether or not the insulation measured by at least one insulation sensor falls below a predefined critical value.

In one embodiment of the method, step b) is repeated continuously or within predefined time intervals or when triggered by predefined events.

A further aspect of the disclosure relates to a battery pack comprising a battery system according to the invention.

Still a further aspect of the present disclosure relates to a vehicle including a battery pack or a battery system as defined above.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1A: illustrates a schematic view (longitudinal cut) of a battery system according to an embodiment of the invention;
- Fig. 1B: illustrates a schematic view (longitudinal cut) of a battery system according to an embodiment of the invention being connected to a safety check sensor;
- Fig. 2: illustrates a schematic view (longitudinal cut) of a battery system according to another embodiment of the invention;
- Fig. 3: illustrates a schematic view (longitudinal cut) of a battery system according to yet another embodiment of the invention;
- Fig. 4: illustrates a schematic view (longitudinal cut) of a battery system according to yet another embodiment of the invention; and
- Fig. 5: illustrates a schematic view (longitudinal cut) of a battery system according to still another embodiment of the invention.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted.

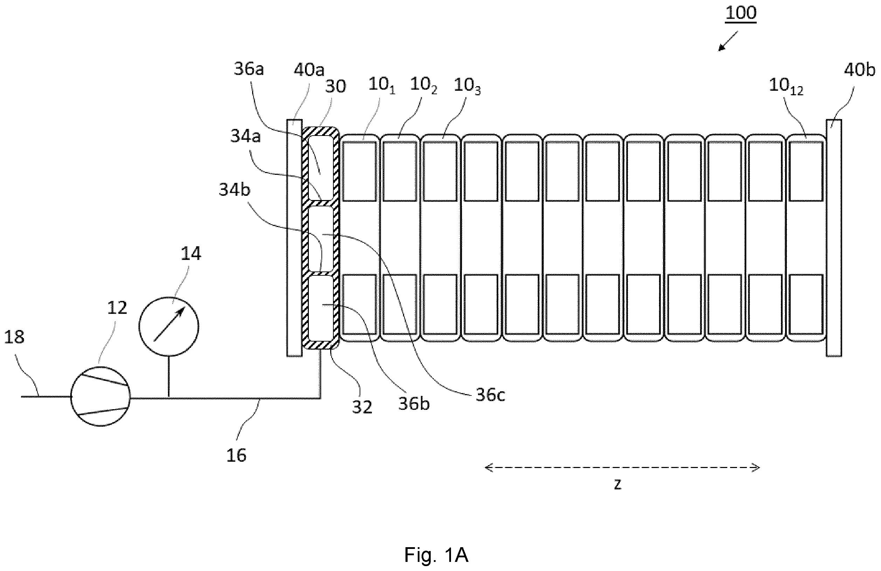

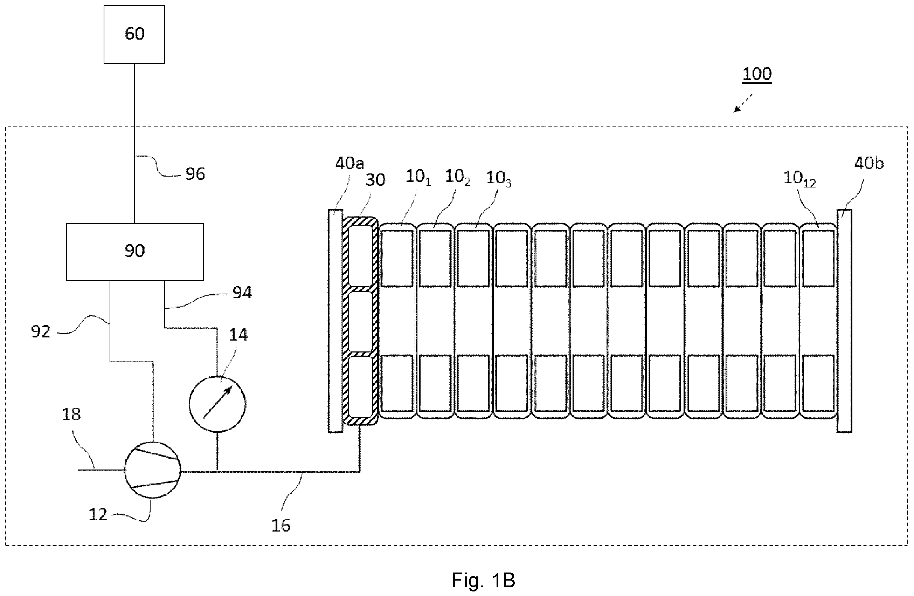

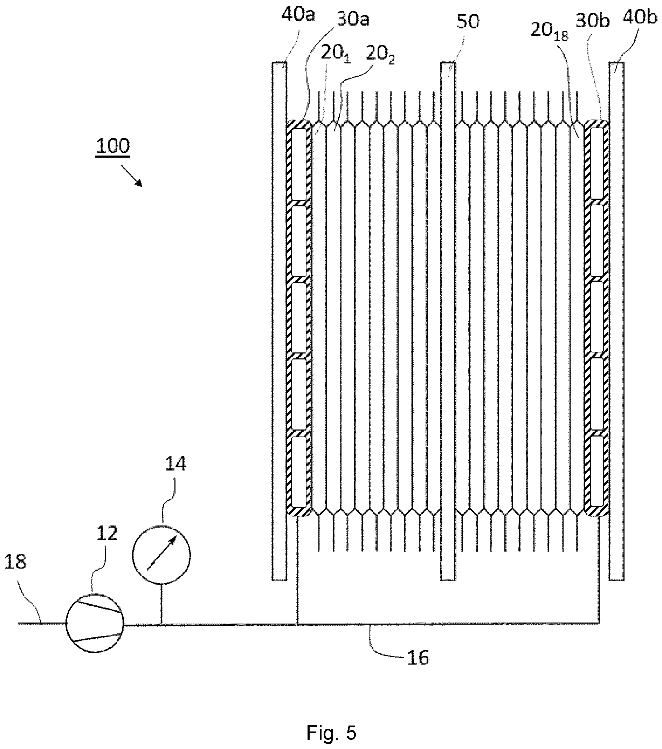

The invention is suited for stacks comprising battery cells such as prismatic metal-can cells 10₁, 10₂, ..., 10₁₂ (see Figs. 1 to 4) or flat pouch cells 20₁, 20₂, ..., 20₁₈ (see Fig. 5). The invention is in particular suited for Li-ion cells and especially for solid state cells (batteries), which require high mechanical pressure during operation.

As shown in Figs. 1 to 5, one or more fluid springs 30, 30a, 30b are integrated into the stack of cells. The fluid springs 30, 30a, 30b may have a flat shape. Hence, the stack comprises the battery cells 10₁, 10₂, ..., 10₁₂, 20₁, 20₂, ..., 20₁₈ as well as one or several fluid springs 30, 30a, 30b. The stack is constrained by fixed end plates 40a, 40b on both sides of the stack. The fluid springs 30, 30a, 30b have the shape of a cushion and comprise a fluid-tight bellows or bag. The fluid springs 30, 30a, 30b comprise an elastic device that may be formed within the bellows or bag of the fluid springs. The elastic device may be the bellows or bag itself, or imbed in the bellows or bag. The elastic device may comprise foam or may be completely made of foam.

Due to the elastic device comprises in the fluid springs 30, 30a, 30b, the fluid springs provide, when integrated in the stack as shown in Figs. 1 to 5, a pressure exerted on the stack of battery cells, the pressure acting along the longitudinal axis z (also referred to as reference axis throughout this document; the axis is only depicted in Fig. 1A, but used to explain the other figures in an analogous way) of the stack, i. e., along an axis leading from the first end plate 40a to the second end plate 40b. Note in this context that if a first element (a fluid spring, cell, positioning plate, or end plate) in a stack of elements provides a pressure on an adjacent second element (likewise a fluid spring, cell, positioning plate, or end plate) in a first direction along the longitudinal axis, the second element exerts the same pressure on the first element in the opposite direction. Also, the pressure of one element is transferred-via one or more intermediate elements-to further elements of the stack not being directly in contact with the first element. Also, if a non-fixated element (a cell or fluid spring) undergoes a first pressure from one side (e. g., from the left in the figures) and a second pressure from the opposite side (e. g., from the right in the figures), the non-fixated elements gets shifted along the axis (i. e., to the left or right in the figures) as long as the absolute value of the pressure exerted from the one side on the element equals the absolute value of the pressure exerted from the other side on the element. Due to the above reasons, the pressure exerted on non-fixated elements arranged in a stack between two fixed elements (end plates, positioning plates) is essentially the same for each of these non-fixated elements. Moreover, if the pressure changes at some point between the two fixated elements (typically, due to a thickness change of one or more of the non-fixated elements in between) such that the pressure exerted on the non-fixated elements would not be the same for all non-fixated elements, the non-fixated elements are shifted until each of the non-fixated elements undergo the same pressure again. To control the pressure in a stack of non-fixated elements being confined between two fixed elements, it thus suffices to control the pressure at one (or a limited) locations between the fixed elements.

For the reasons set forth above, the mechanical pressure in the stack of battery cells 10₁, 10₂, ..., 10_{N}, 20₁, 20₂, ..., 20_{N} in the battery system is equal to an adjustable pressure provided by the one or more fluid springs 30, 30a, 30b to the adjacent elements (battery cells, end plates, or positioning plates). The pressure provided by a fluid spring 30, 30a, 30b is composed of (i) the pressure provided by the elastic device comprised by the fluid spring and (ii) by the fluid pressure that prevails within the fluid spring. The fluid pressure within a fluid spring may be measured with a pressure sensor 14.

The elastic device provides a pressure in the stack even when the fluid pressure within a fluid spring equals the pressure of the ambient atmosphere. The pressure provided by the elastic device depends on the Young's modulus of the elastic device (which may be in turn depending on the position in a direction perpendicular to the longitudinal axis of the stack and/or on the temperature of the elastic device) and the thickness (measured along the longitudinal axis of the stack) of the elastic device comprised by the fluid spring being confined between adjacent elements in the stack. The relation between pressure and thickness of the elastic device comprised in fluid spring may in good approximation be given by Hook's law.

The elastic device may constitute a maximum pressure exerted to the adjacent elements of the fluid spring 30, 30a, 30b in the stack. The overall-pressure exerted by the fluid spring-given by the pressure provided by the elastic device plus the fluid pressure within the fluid in the fluid spring-may be controlled by controlling the pressure of the fluid in the fluid spring 30, 30a, 30b. According to the invention, an underpressure is generated in the fluid of the fluid spring. Here, an underpressure of the fluid is defined as a pressure in the fluid being at maximum equal to the pressure of the ambient atmosphere, i. e., a fluid pressure being equal to or less than the pressure of the ambient atmosphere. In other words, the mechanical overall-pressure can be reduced by evacuating the fluid-tight bellows or bag of the fluid spring with a vacuum pump.

To control the (under)pressure in a fluid spring 30, 30a, 30b, a fluid pressure adjusting means 12, 12a, 12b is employed. The fluid pressure adjusting means 12 may be a combination of a vacuum pump and a valve. In other words, the fluid pressure adjusting means 12 adjusts the pressure to the required set point.

Due to the elastic device, the one or more fluid springs 30, 30a, 30b in the stack would also provide a pressure in case of gas-pressure loss or leaks.

The fluid springs 30, 30a, 30b employed in embodiments of the present invention may have the same cross section as the battery cells 10₁, 10₂, ..., 10_{N}, 20₁, 20₂, ..., 20_{N} and may preferably be directly attached to the adjacent cells inside the stack. Throughout this document, the term "cross section" shall refers to a side area of an element (a fluid spring, cell, positioning plate, or end plate) perpendicular to the longitudinal axis z of the stack as defined above. The width (i. e., the thickness measured along the longitudinal axis z of the stack) of each of the employed fluid springs 30, 30a, 30b may be in the range of 5 mm to 50 mm. The working media (i. e., the fluid in the fluid spring) may be any compressible or incompressible fluid. For example, the working media may be air. The most cost-effective media to inflate the air-spring is ambient air.

Figure 1A is a schematic view of a battery system or battery module 100 according to a first embodiment of the invention. The battery system 100 of Fig. 1 comprises a stack of battery cells 10₁, 10₂, ..., 10_{N} (with the index N denoting the number of cells in the stack, i. e., Fig. 1 shows an example with N = 12, i. e., twelve battery cells 10₁, 10₂, ..., 10₁₂ are employed) confined between a first end plate 40a and a second end plate 40b. The end plates 40a, 40b are part of the carrier framework or pack frame of the battery system or battery module 100. Thus, the end plates 40a, 40b provide fixation and restraint to both outer sides of the stack. According to the first embodiment, the fluid spring 30 is positioned on one side of the stack of cells. More specifically, the fluid spring 30 is positioned between one of the end plates (in the example of Fig. 1: the first end plate 40a) and cell 10₁ most adjacent to that end plate 40a.

If the first end plate bends due to the force / pressure exerted to it from the most adjacent cell 10₁, the bending is compensated by the flexible fluid spring 30, as the flexible fluid spring 30 changes its shape accordingly. Therefore, the pressure provided onto the surface of the cells (and in particular to the first cell 10₁) is still uniform.

Via a conduit 16, the fluid in the bellows or bag of the fluid spring 30 is in fluid communication with a fluid pressure adjusting means 12 that may comprise a vacuum pump and a valve. The fluid pressure adjusting means 12 has a second connection 18 to a reservoir (not shown) for the working media, i. e. the fluid. In case of using ambient air as a working media, the connection 18 is simply an outlet to the ambient atmosphere. Further, a pressure sensor 14 may be arranged at a branch-off of the conduit 16 to measure the fluid pressure in the fluid spring 30.

The pressures sensor 14 and the fluid pressure adjusting means 12 may each be connected (electrically or wirelessly) with a control unit (not shown) such that the control unit may receive signals from the pressure sensor 14 encoding the measured pressure and may transmit signals to the fluid pressure adjusting means 12 to control the fluid pressure. The control unit may be integrated in the BMU or BMS of the battery pack comprising the battery system100 shown in Fig. 1.

In the example of Fig. 1, the bellows or bag of fluid spring 30 is made of or at least comprises an outer wall 32 suitable for being filled with fluid. In other words, the outer wall 32 embeds one or more cavities 36a, 36b, 36c suitable for the ingestion of fluid. The outer wall may be formed of an elastic material such that the bellows or bag itself forms an elastic device. To support the elasticity of the fluid spring 30, and in particular the elasticity in the z-direction, one or more elastic support elements 34a, 34b may be formed inside the bellows or bag of fluid spring 30. The elastic support elements 34a, 34b may be made of the same material as the outer wall 32, or the elastic support elements 34a, 34b may be made of a material different from the material of the outer wall 32. In the latter case, the elasticity (i. e., the Young's modulus) of the material of the outer wall 32 may be different from the elasticity of the elastic support elements 34a, 34b.

The one or more elastic support elements 34a, 34b may be bar-shaped (the bars each having a longitudinal center axis directed in the z-direction) and are arranged inside the bellows or bag of the fluid spring 30 such that only one single cavity is formed inside the outer wall 32, in this case, only the cross-sectional cut through this cavity is interrupted into several cavities 36a, 36b, 36c as shown in Fig. 1A, which are however, connected to each other in front of and behind the plane of the figure. Alternatively, the elastic support elements may be wall-shaped, such that the bellows of bag of the fluid spring 30 is divided in several cavities. In any case, each of the one or more cavities formed within the bellow or bag of fluid spring 30 must be in fluid connection with the fluid pressure adjusting means 12 (and the pressure sensor 14).

The assembly of the fluid spring 30 as described above with reference to Fig. 1A applies also to each of the fluid springs shown in Figs. 1B and 2 to 4. Also, the principle of the assembly can be readily applied to the fluid springs 30a and 30b shown in Fig. 5. Thus, the description of the construction of the fluid springs will not be repeated throughout the description of the following figures.

To control the fluid pressure adjusting means 12 for controlling the pressure (underpressure) in the fluid spring 30, a control unit 90 may be provided as shown in Fig. 1B. The control unit may be integrated in the battery management unit (BMU) of the battery system. The control unit 90 may be connected to the fluid pressure adjusting means 12 for controlling the pressure (underpressure) in the fluid spring 30 via a signal connection line 92. Alternatively, the signal from the control unit 90 to the fluid pressure adjusting means 12 for controlling the pressure may be transferred wirelessly. In order to monitor the pressure inside the fluid spring 30, the control unit 90 is further connected to the pressure sensor 14 via a further signal connection line 94. Alternatively, the signal from the pressure sensor 14 to the control unit 90 may be transferred wirelessly.

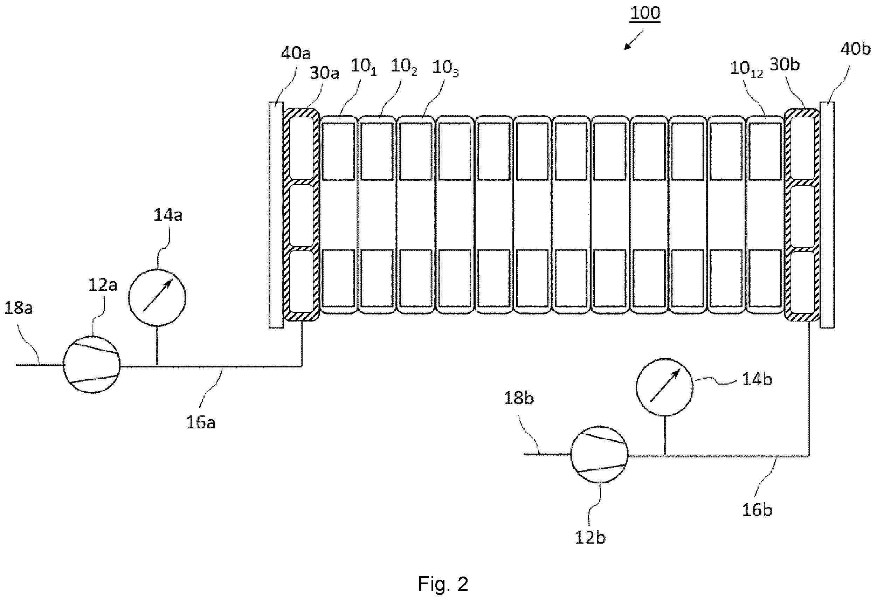

Further, at least one safety check sensor 60 may be provided. The at least one safety check sensor 60 may be part of the battery system 100 or the safety check sensor(s) 60 may be arranged externally (as shown in Fig. 1B and indicated by the dashed box). The at least one safety check sensor 60 may be adapted to measure any physical / technical variable or entity, which may be used to evaluate the safety of the situation. For example, the safety check sensor 60 may comprise an acceleration sensor to detect, whether an abrupt (negative) acceleration occurs that may indicate a crash of a vehicle. Alternatively or additionally, the safety check sensor 60 may comprise a temperature sensor to monitor the temperature of the ambient air of the battery system. As the actual evaluation of the measurement data provided by the safety check sensor(s) 60 is performed by the control unit 90, the latter is connected to the safety check sensor(s) 60 via one or more signal connection lines 96. Alternatively, the signal from the safety check sensor(s) 60 to the control unit 90 may be transferred wirelessly. Figure 2 is a schematic view of a battery system or battery module 100 according to a second embodiment of the invention. Like in case of the first embodiment described above, also the battery system of Fig. 2 comprises a stack of battery cells 10₁, 10₂, ..., 10_{N} (the index N denoting the number of cells in the stack, here N = 12) confined between a first end plate 40a and a second end plate 40b. According to the second embodiment, a first fluid spring 30a is positioned on one outer side of the stack of cells, and a second fluid spring 30b is positioned on the opposite outer side of the stack of cells. More specifically, the first fluid spring 30a is positioned between a first end plate 40a and a first cell 10₁ being arranged, in the stack, most adjacent to the first end plate 40a, and the second fluid spring 30b is positioned between the second end plate 40b and a last cell 10_{N} being arranged, in the stack, most adjacent to the second end plate 40b.

In the example shown in Fig. 2, the fluid in the bellows or bag of the first fluid spring 30a is in fluid communication, via a first conduit 16a, with a first fluid pressure adjusting means 12a that may comprise a vacuum pump and a valve. The first fluid pressure adjusting means 12a has a second connection 18a to a (external) reservoir (not shown) for the working media, i. e., the fluid. Also, a first pressure sensor 14a may be arranged at a branch-off of the first conduit 16a to measure the fluid pressure in the first fluid spring 30a.

A further assembly-comprising a second fluid pressure adjusting means 12b, a second conduit 16b, a further connection 18b to an external fluid reservoir (not shown), and, optionally, a second pressure sensor 14b-is connected, via the second conduit 16b, to the second fluid spring 30b in a completely corresponding manner.

In the embodiment of Fig. 2, the two fluid springs 30a and 30b should preferably always be pressurized to the same pressure to prevent shifting of all cells to one side. However, the two fluid springs 30a, 30b are not connected and can thus controlled independently from each other.

Typically, the same working media (fluid) is used for operating the first fluid spring 30a and the second fluid spring 30b. However, in embodiments of the battery system according to the invention, different working media may be used to operate the first fluid spring 30a and the second fluid spring 30b.

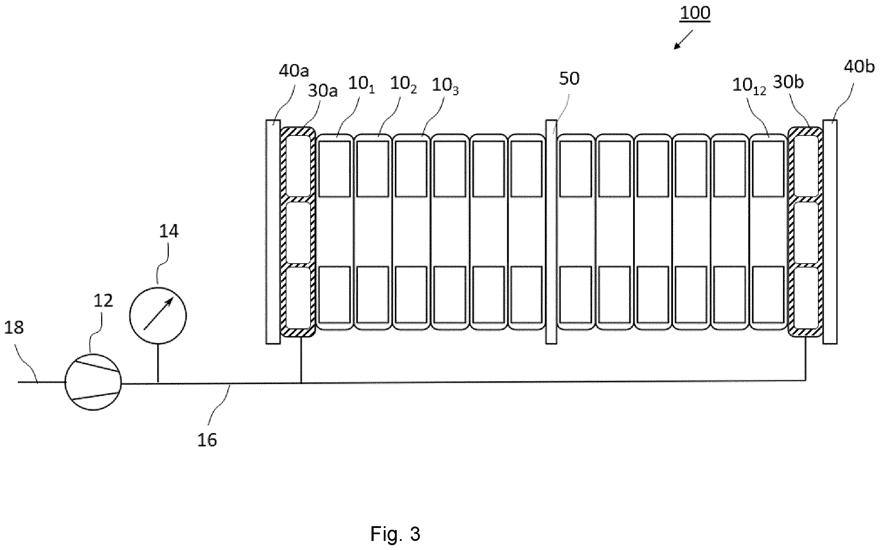

In an alternative embodiment, of course, the fluid springs 30a, 30b may be connected to each other, e. g., by the same conduit 16 as shown in the example of Fig. 3; see also the respective remarks as to the advantages of such an assembly as described below in the context of Fig. 3.

The first pressures sensor 14a and the first fluid pressure adjusting means 12a may each be connected (electrically or wirelessly) with a control unit (not shown) such that the control unit may receive signals from the pressure sensor 14a encoding the measured pressure within the first fluid spring 30a and may transmit signals to the first fluid pressure adjusting means 12a to control the fluid pressure. In a similar manner, the second pressures sensor 14b and the second fluid pressure adjusting means 12b may each be connected (electrically or wirelessly) with the control unit (not shown). The control unit may be integrated in the BMU or BMS of the battery pack comprising the battery system 100 shown in Fig. 2.

If the end plates 40a, 40b bend due to the force / pressure exerted to from the respective most adjacent cells 10₁, 10_{N}, the bending of the end plates 40a, 40b is compensated by the fluid springs 30a and 30b, as the fluid springs 30a and 30b each change the shape accordingly. Therefore, the pressure on the surface of the cells (and in particular, on the first cell 10₁ and the last cell 10_{N} in the stack) is still uniform.

Figure 3 is a schematic view of a battery system or battery module 100 according to a third embodiment of the invention. The embodiment shown in Fig. 3 largely corresponds to that described above in the context of the second embodiment depicted in Fig. 2. Thus, the above remarks as to the assembly of the stack comprising the cells 10₁, 10₂, ..., 10_{N} (the index N denoting the number of cells in the stack, here N = 12), the end plates 40a, 40b and the fluid springs 30a, 30b apply in case of Fig. 3 correspondingly. However, in addition to the stack shown in Fig. 2, the stack of the third embodiment comprises a positioning plate 50. The positioning plate 50 may be part of the carrier framework or frame pack and thus have a fixed position. However, the positioning plate 50 may also be arranged shiftable or moveable along the longitudinal axis of the stack. Preferably, the positioning plate 50 may be positioned in the middle of the battery stack, i. e., in the example shown in Fig. 3, between the 6^{th} and the 7^{th} cell, when numbering the cells starting from the left cell (the first cell 10₁) to the right cell (the last cell 10₁₂) within the stack. In general, when the stack consists of N cells and N is an even integer, the positioning plate 50 may be positioned between the (N / 2)-th and the (N / 2 + 1)-th battery cell, and if N is an odd integer, positioning plate 50 may be positioned between the ((N - 1) / 2)-th and the ((N + 1) / 2)-th battery cell.

The third embodiment with fluid springs 30a, 30b placed on both outer sides of the cell stack and a positioning plate 50 placed in the center of the cell stack as shown in Fig. 3 provides for an optimum pressure uniformity. In this case, the two fluid springs 30a, 30b should preferably be pressurized to the same pressure in order to negate any force / pressure on the positioning plate 50.

The working media (fluid) of the two fluid springs 30a, 30b may communicate to equilibrate the pressure. To that end, the fluid springs 30a, 30b may be connected to each other by a conduit 16, which is also used to establish the fluid communication to the fluid pressure adjusting means 12. The fluid pressure adjusting means 12 may be, as already described in the context of the foregoing figures, a vacuum pump and a valve. As the two fluid springs 30a, 30b are connected by (branches of) the same conduit 16, it is sufficient in this case to use a single fluid pressure adjusting means 12 only.

A pressure sensor 14 may be connected to conduit 16 to measure the pressure in both, the first and the second fluid spring 30a, 30b being, due to the assembly, in pressure equilibrium. Again, the fluid pressure adjusting means 12 and the pressure sensor 14 may be connected (electrically or wirelessly) to a control unit to supervise the pressure and control the pressure as described in the context of the foregoing figures.

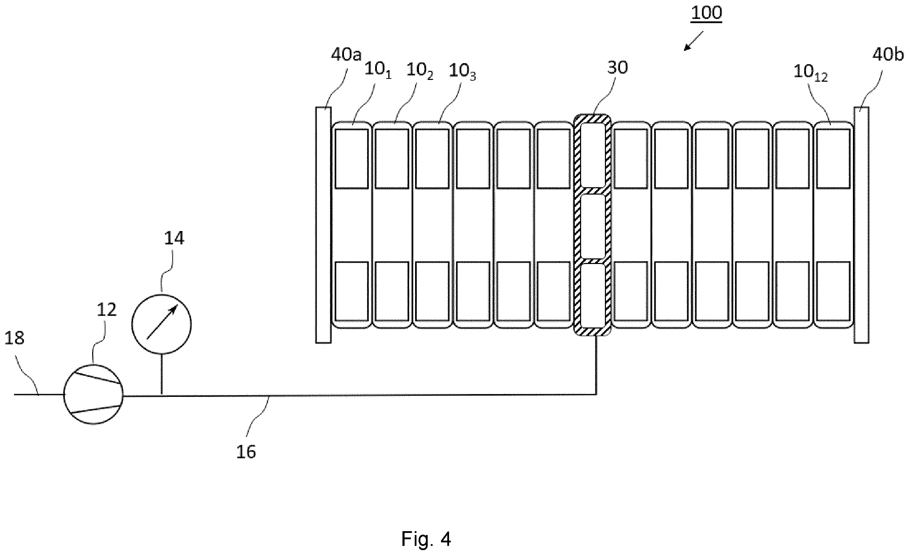

A fluid spring 30 may also be placed in the middle of the stack to reduce the number of components. Such an assembly is shown in Fig. 4, illustrating a schematic view of a battery system or battery module according to a forth embodiment of the invention. Except for the position of the (single) fluid spring 30, the arrangement of the components of the battery module of Fig. 4 corresponds to the first embodiment shown in Fig. 1. However, unlike to the first embodiment, the fluid spring 30 is placed in the center of the stack of battery cells. In the example shown in Fig. 4, the fluid spring 30 is arranged between the 6^{th} and the 7^{th} cell, when numbering the cells starting from the left cell (the first cell 10₁) to the right cell (the last cell 10₁₂) within the stack. In general, when the stack consists of N cells and N is an even integer, the fluid spring 30 may be positioned between the (N / 2)-th and the (N / 2 + 1)-th battery cell, and if N is an odd integer, fluid spring 30 may be positioned between the ((N - 1) / 2)-th and the ((N + 1) / 2)-th battery cell. Due to placing the fluid cell in the center of the stack, the equal distribution of pressure along the longitudinal axis of the stack is improved.

Eventually, Figure 5 shows a schematic view of a battery system or battery module according to a fifth embodiment of the invention. The embodiment of the battery module 100 shown in Fig. 5 corresponds to the third embodiment of the battery module as shown in Fig. 3 except for the battery cells, which are 18 flat pouch cells 20₁, 20₂, ..., 20₁₈ in case of the module of Fig. 5 instead of 12 prismatic metal-can cells 10₁, 10₂, ..., 10₁₂ as shown in Fig. 3. Also in Fig. 5, a positioning plate 50 is placed in the center of the stack of battery cells. The functioning of the positioning plate 50 corresponds to that already described in the context of Fig. 3. As the pouch cells are smaller (with regard to the longitudinal axis), the assembly of the fifth is altogether smaller in comparison with the third embodiment, although more battery cells are employed.

The invention is especially suitable for long cell stacks (e. g. for stacks comprising 12 or more cells), so that only one or two fluid springs may be used for many cells. Of course, also more fluid springs may be employed, if required.

Fluid springs apply a uniform pressure to the outer surface, in contrast to pressure plates (such as end plates) which may bend and apply non-uniform pressure under high load. When the pressure on the stack is uniform, the performance, safety, and/or ageing of the stack is improved. However, when a fluid spring comprises an elastic device, e. g., foam imbedded in the bellows or bag of the fluid spring, the elastic device may exhibit a Young's modulus depending on the position on a plain perpendicular to the longitudinal axis of the stack (reference axis). In embodiments of the battery system or battery module according to the invention, the Young's modulus is chosen to be constant over that plain, i. e. the Young's modulus is independent from the position on this plain. In other embodiments, the Young's modulus is chosen to be a function of the position of a plain perpendicular to the longitudinal axis. For example, the Young's modulus may be chosen such that, when the fluid spring is arranged in the stack of cells, the cells having a center point with regard to the perpendicular plain, the Young's modulus has a maximum at the position of that center point (with regard to the perpendicular plain) and decreases with the distance to that center point. In the latter case, the Young's modulus may be rotationally symmetric around an axis through said center point and being directed in the direction of the longitudinal axis of the stack. For example, if in an Cartesian coordinate system z denotes the direction of the longitudinal axis, and if x and y denote the position on a plain perpendicular to the z-direction with (x, y) = (0, 0) denoting the center point of the cells with regard to the perpendicular plain, the Young's modulus of the elastic device may be described by a function E(x, y, z) = f(x² + y²) with f(r) having a maximum at r = 0 and is monotonously decreasing as r increases. Then, the pressure provided by the fluid spring has a maximum at the center of the cells, i. e. at (x, y) = (0, 0), where-due to the bending of the housing of the battery cells caused by the inner pressure of the battery cells-the pressure of the cells has also maximum.

Over entire lifetime, due to ageing, cells can show irreversible expansion and elongation of the stack, or-if the length is restricted-excessive build-up of pressure in the stack. Build-up of excessive pressure may cause Li-plating on the anode of a Li-lon cell. Li-plating is safety critical and reduces cell capacity. With fluid springs, the expansion can be compensated, and elongation or build-up of excessive pressure in the stack can be prevented.

The pressure may be adjusted on demand. For example, different pressures for charge and discharge of the cell, or different pressures depending on the state of charge (SoC) of the cell or different pressures depending on the state of health of the cell.

If a thermal runaway is detected, the fluid springs may be depressurized, to reduce the contact between the cells and to decrease the heat transfer at the interfaces between the cells. A decreased heat transfer has the advantage of impeding or slowing down the propagation of the thermal runaway from cell to cell.

The control software of the battery pack which calculates the pressure set point can be easily updated, if field data shows the necessity adjust the algorithm for optimal cell pressurizing. The mechanical parts must not be changed if the pressure needs to be adjusted.

### Reference signs

- 100: battery system (battery module)

- 10₁, 10₂, ..., 10_{N}: battery cells designed as metal cans
- 20₁, 20₂, ..., 20_{N}: battery cells designed as flat pouch cells

- 12: means for controlling the pressure (underpressure) in the fluid springs
- 14: pressure sensor
- 16: fluid connection
- 18, 18a, 18b: external fluid connection
- 30, 30a, 30b: fluid springs
- 32: outer wall of fluid spring
- 34a, 34b: elastic support elements
- 36a, 36b, 36c: cavities
- 40a: first end plate
- 40b: second end plate
- 50: positioning plate
- 60: safety check sensor
- 90: control unit
- 92, 94, 96: signal connection lines

## Claims

1. A battery system (100) comprising:
a stack comprising a plurality of battery cells (10₁, 10₂, ..., 10₁₂; 20₁, 20₂, ..., 20₁₈) being stacked along a virtual reference axis (z);
a pack frame comprising a first end plate (40a) and a second end plate (40b);
one or more fluid springs (30, 30a, 30b) configured for holding a fluid;
one or more fluid pressure adjusting means (12, 12a, 12b) for adjusting a fluid pressure within the at least one fluid spring (30, 30a, 30b);
a control unit (90) configured for controlling the one or more fluid pressure adjusting means (12, 12a, 12b);
wherein the stack is placed between the first end plate (40a) and the second end plate (40b);
wherein each of the one or more fluid springs (30, 30a, 30b) is positioned between the first endplate and the second end plate, and is configured for exerting a pressure on at least one of the battery cells in a direction along the reference axis (z);
wherein each of the fluid pressure adjusting means (12, 12a, 12b) is connected to one or more fluid springs (30, 30a, 30b);
wherein the control unit (90) is configured for receiving a safety check signal indicating a negative acceleration from at least one safety check sensor (60) comprising an acceleration sensor configured to detect a negative acceleration with an absolute acceleration value equal to or larger than a predefined positive value; and wherein the control unit (90) is further configured for evaluating, whether one or more received safety check signal(s), which indicate a negative acceleration, may indicate a safety critical situation, and for operating, upon evaluation that the safety check signal(s) indicating a negative acceleration may indicate a safety critical situation, the fluid pressure adjusting means (12, 12a, 12b) such that the fluid pressure in the fluid springs (30, 30a, 30b) is decreased.

2. The battery system (100) according to claim 1, further comprising at least one fluid pressure sensor (14, 14a, 14b) configured to measure a fluid pressure being present in at least one of the fluid springs;
wherein the control unit is configured for receiving a pressure signal corresponding to the pressure being measured from each of the fluid pressure sensors (14, 14a, 14b); and
wherein the control unit is further configured to control, dependent on the one or more received pressure signals, the one or more fluid pressure adjusting means (12, 12a, 12b).

3. The battery system (100) according to claim 2,
wherein the control unit is configured to detect, from the pressure signal provided from each of the fluid pressure sensors (14, 14a, 14b), a pressure change in the fluid of the fluid springs to which the fluid pressure sensors (14, 14a, 14b) are connected;
wherein the control unit is further configured to control at least one of the fluid pressure adjusting means (12, 12a, 12b) such that upon detection of a pressure increase by at least one of the fluid pressure sensors (14, 14a, 14b), the fluid adjusting pressure means (12, 12a, 12b) decreases the pressure of fluid within the fluid springs (30, 30a, 30b) connected to the respective fluid adjusting pressure means (12, 12a, 12b); and
wherein the control unit is further configured to control at least one of the fluid pressure adjusting means (12, 12a, 12b) such that, upon detection of a pressure decrease by at least one of the fluid pressure sensors (14, 14a, 14b), the fluid adjusting pressure means (12, 12a, 12b) increases the pressure of fluid within the fluid springs (30, 30a, 30b) connected to the respective fluid adjusting pressure means.

4. The battery system (100) according to any one of claims 1 to 3,
wherein the first battery cell (10₁, 20₁) of the stack is, when viewed along the reference axis (z), positioned next to the first end plate (40a) and the last battery cell (10₁₂, 20₁₈) of the stack is, when viewed along the reference axis (z), positioned next to the second end plate (40b);
wherein one fluid spring (30a) is placed between the first end plate (40a) and the first battery cell (10₁, 20₁) of the stack; and
wherein a further fluid spring (30b) is placed between the second end plate (40b) and the last battery cell (10₁₂, 20₁₈) of the stack.

5. The battery system (100) according to any one of claims 1 to 4, wherein each of the fluid springs (30, 30a, 30b) are in fluid communication with each other.

6. The battery system (100) according to any one of claims 1 to 5, wherein at least one of the fluid pressure adjusting means (12, 12a, 12b) comprises a vacuum pump and/or a valve and/or a compressor.

7. The battery system (100) according to any one of claims 1 to 6,
wherein at least one safety check sensor comprises a temperature sensor configured to measure the temperature of the stack of battery cells or to measure the temperature of at least one of the battery cells comprised in the stack; and
wherein the control unit evaluates, whether or not the temperature or temperature pattern measured by at least one temperature sensor may indicate a safety critical thermal event.

8. A method for operating a battery system (100) according to any one of claims 1 to 7, comprising the steps of:
a) adjusting a pressure in the fluid of at least one of the fluid springs (30, 30a, 30b);
b) checking, by the control unit, whether a safety check signal has been received from at least one safety check sensor comprising an acceleration sensor configured to detect a negative acceleration with an absolute acceleration value equal to or larger than a predefined positive value;
c) evaluating, by the control unit, whether the received safety check signals may indicate a safety critical situation; and
d) operating, by the control unit upon evaluation that the safety check signal(s) may indicate a safety critical situation, the fluid pressure adjusting means (12, 12a, 12b) such that the fluid pressure in the fluid springs (30, 30a, 30b) is decreased.

9. The method for operating a battery system (100) according to claim 8, wherein step b) comprises:
- if at least one safety check sensor comprises an acceleration sensor: checking, whether the received safety check signals from at least one of the acceleration sensors indicate a negative acceleration with an absolute acceleration value equal to or larger than a predefined positive value; and/or
- if at least one safety check sensor comprises a thermal sensor configured to measure the temperature of the stack of battery cells or to measure the temperature of at least one of the battery cells comprised in the stack: evaluating, whether or not the temperature or temperature pattern measured by at least one temperature sensor may indicate a safety critical thermal event; and/or
- if at least one safety check sensor comprises a cell voltage sensor configured for measuring the voltage over at least one cell of the battery system: evaluating, whether or not the voltage or voltage pattern measured by at least one cell voltage sensor may indicate a safety critical event; and/or
- if at least one safety check sensor comprises a current sensor configured for measuring the current produced by the battery system or at least by one cell of the battery system: evaluating, whether or not the current or current pattern measured by at least one current sensor may indicate a safety critical event; and/or
- if at least one safety check sensor comprises an insulation sensor: evaluating, whether or not the insulation measured by at least one insulation sensor falls below a predefined critical value.

10. The method for operating a battery system (100) according to claim 8or 9, wherein step b) is repeated continuously or within predefined time intervals or when triggered by predefined events.

11. A battery pack comprising the battery system according to any one of claims 1 to 7.

12. A vehicle comprising the battery system according to any one of claims 1 to 7 or the battery pack according to claim 11.

## Patentansprüche

1. Batteriesystem (100), umfassend:
einen Stapel, umfassend eine Mehrzahl von Batteriezellen (10₁, 10₂, ..., 10₁₂; 20₁, 20₂, ..., 20₁₈), die entlang einer virtuellen Referenzachse (z) gestapelt sind;
einen Pack-Rahmen, umfassend eine erste Endplatte (40a) und eine zweite Endplatte (40b);
eine oder mehrere Fluidfedern (30, 30a, 30b), dazu ausgestaltet, ein Fluid zu halten;
ein oder mehrere Fluiddruckeinstellmittel (12, 12a, 12b) zum Einstellen eines Fluiddrucks innerhalb der mindestens einen Fluidfeder (30, 30a, 30b);
eine Steuereinheit (90), ausgestaltet zum Steuern des einen oder der mehreren Fluiddruckeinstellmittel (12, 12a, 12b);
wobei sich der Stapel zwischen der ersten Endplatte (40a) und der zweiten Endplatte (40b) befindet;
wobei jede von der einen oder mehreren Fluidfedern (30, 30a, 30b) zwischen der ersten Endplatte und der zweiten Endplatte positioniert ist und dazu ausgestaltet ist, einen Druck auf mindestens eine der Batteriezellen in einer Richtung entlang der Referenzachse (z) auszuüben;
wobei jedes von den Fluiddruckeinstellmitteln (12, 12a, 12b) mit einer oder mehreren Fluidfedern (30, 30a, 30b) verbunden ist;
wobei die Steuereinheit (90) dazu ausgestaltet ist, von mindestens einem Sicherheitsprüfsensor (60), der einen Beschleunigungssensor umfasst, der dazu ausgestaltet ist, eine negative Beschleunigung mit einem absoluten Beschleunigungswert größer/gleich einem vordefinierten positiven Wert, zu erkennen, ein Sicherheitsprüfsignal, das eine negative Beschleunigung angibt, zu empfangen; und wobei die Steuereinheit (90) ferner dazu ausgestaltet ist, einzuschätzen, ob ein oder mehrere empfangene(s) Sicherheitsprüfsignal(e), das/die eine negative Beschleunigung angibt/angeben, möglicherweise eine sicherheitskritische Situation angibt/angeben, und um bei der Einschätzung, dass das/die Sicherheitsprüfsignal(e), das/die eine negative Beschleunigung angibt/angeben, möglicherweise eine sicherheitskritische Situation angibt/angeben, die Fluiddruckeinstellmittel (12, 12a, 12b) derart zu betreiben, dass der Fluiddruck in den Fluidfedern (30, 30a, 30b) verringert wird.

2. Batteriesystem (100) nach Anspruch 1, ferner umfassend mindestens einen Fluiddrucksensor (14, 14a, 14b), dazu ausgestaltet, einen in mindestens einer der Fluidfedern vorhandenen Fluiddruck zu messen;
wobei die Steuereinheit dazu ausgestaltet ist, ein Drucksignal, das dem von jedem der Fluiddrucksensoren (14, 14a, 14b) gemessenen Druck entspricht, zu empfangen; und
wobei die Steuereinheit ferner dazu ausgestaltet ist, in Abhängigkeit von dem einen oder mehreren empfangenen Drucksignalen das eine oder die mehreren Fluiddruckeinstellmittel (12, 12a, 12b) zu steuern.

3. Batteriesystem (100) nach Anspruch 2,
wobei die Steuereinheit dazu ausgestaltet ist, aus dem von jedem der Fluiddrucksensoren (14, 14a, 14b) bereitgestellten Drucksignal eine Druckänderung in dem Fluid der Fluidfedern, mit denen die Fluiddrucksensoren (14, 14a, 14b) verbunden sind, zu erkennen;
wobei die Steuereinheit ferner dazu ausgestaltet ist, mindestens eines von den Fluiddruckeinstellmitteln (12, 12a, 12b) derart zu steuern, dass bei Erkennung eines Druckanstiegs durch mindestens einen der Fluiddrucksensoren (14, 14a, 14b) die Fluideinstelldruckmittel (12, 12a, 12b) den Druck von Fluid innerhalb der mit den entsprechenden Fluideinstelldruckmitteln (12, 12a, 12b) verbundenen Fluidfedern (30, 30a, 30b) verringern; und
wobei die Steuereinheit ferner dazu ausgestaltet ist, mindestens eines von den Fluiddruckeinstellmitteln (12, 12a, 12b) derart zu steuern, dass bei Erkennung eines Druckabfalls durch mindestens einen von den Fluiddrucksensoren (14, 14a, 14b) die Fluideinstelldruckmittel (12, 12a, 12b) den Druck von Fluid innerhalb der mit den entsprechenden Fluideinstelldruckmitteln verbundenen Fluidfedern (30, 30a, 30b) erhöhen.

4. Batteriesystem (100) nach einem der Ansprüche 1 bis 3,
wobei die erste Batteriezelle (101, 201) des Stapels bei Betrachtung entlang der Referenzachse (z) neben der ersten Endplatte (40a) positioniert ist und die letzte Batteriezelle (1012, 2018) des Stapels bei Betrachtung entlang der Referenzachse (z) neben der zweiten Endplatte (40b) positioniert ist;
wobei sich eine Fluidfeder (30a) zwischen der ersten Endplatte (40a) und der ersten Batteriezelle (101, 201) des Stapels befindet; und
wobei sich eine weitere Fluidfeder (30b) zwischen der zweiten Endplatte (40b) und der letzten Batteriezelle (1012, 2018) des Stapels befindet.

5. Batteriesystem (100) nach einem der Ansprüche 1 bis 4, wobei alle Fluidfedern (30, 30a, 30b) miteinander im Fluidaustausch sind.

6. Batteriesystem (100) nach einem der Ansprüche 1 bis 5, wobei mindestens eines von den Fluiddruckeinstellmitteln (12, 12a, 12b) eine Vakuumpumpe und/oder ein Ventil und/oder einen Kompressor umfasst.

7. Batteriesystem (100) nach einem der Ansprüche 1 bis 6,
wobei mindestens ein Sicherheitsprüfsensor einen Temperatursensor umfasst, der dazu ausgestaltet ist, die Temperatur des Stapels von Batteriezellen zu messen oder die Temperatur mindestens einer der in dem Stapel enthaltenen Batteriezellen zu messen; und
wobei die Steuereinheit einschätzt, ob die Temperatur oder das Temperaturmuster, gemessen von mindestens einem Temperatursensor, möglicherweise ein sicherheitskritisches thermisches Ereignis angibt oder nicht.

8. Verfahren zum Betreiben eines Batteriesystems (100) nach einem der Ansprüche 1 bis 7, umfassend die folgenden Schritte:
a) Einstellen eines Drucks in dem Fluid mindestens einer der Fluidfedern (30, 30a, 30b);
b) Prüfen, durch die Steuereinheit, ob von mindestens einem Sicherheitsprüfsensor, der einen Beschleunigungssensor umfasst, der dazu ausgestaltet ist, eine negative Beschleunigung mit einem absoluten Beschleunigungswert größer/gleich einem vordefinierten positiven Wert zu erkennen, ein Sicherheitsprüfsignal empfangen wurde;
c) Einschätzen, durch die Steuereinheit, ob die empfangenen Sicherheitsprüfsignale möglicherweise eine sicherheitskritische Situation angeben; und
d) Betreiben, durch die Steuereinheit bei der Einschätzung, dass das/die Sicherheitsprüfsignal(e) möglicherweise eine sicherheitskritische Situation angibt/angeben, der Fluiddruckeinstellmittel (12, 12a, 12b), derart, dass der Fluiddruck in den Fluidfedern (30, 30a, 30b) verringert wird.

9. Verfahren zum Betreiben eines Batteriesystems (100) nach Anspruch 8, wobei Schritt b) umfasst:
- wenn mindestens ein Sicherheitsprüfsensor einen Beschleunigungssensor umfasst: Prüfen, ob die von mindestens einem der Beschleunigungssensoren empfangenen Sicherheitsprüfsignale eine negative Beschleunigung mit einem absoluten Beschleunigungswert größer/gleich einem vordefinierten positiven Wert angeben; und/oder
- wenn mindestens ein Sicherheitsprüfsensor einen thermischen Sensor umfasst, der dazu ausgestaltet ist, die Temperatur des Stapels von Batteriezellen zu messen oder die Temperatur mindestens einer der in dem Stapel enthaltenen Batteriezellen zu messen: Einschätzen, ob die Temperatur oder das Temperaturmuster, gemessen von mindestens einem Temperatursensor, möglicherweise ein sicherheitskritisches thermisches Ereignis angibt oder nicht; und/oder
- wenn mindestens ein Sicherheitsprüfsensor einen Zellenspannungssensor umfasst, der dazu ausgestaltet ist, die Spannung über mindestens eine Zelle des Batteriesystems zu messen: Einschätzen, ob die Spannung oder das Spannungsmuster, gemessen durch mindestens einen Zellenspannungssensor, möglicherweise ein sicherheitskritisches Ereignis angibt oder nicht; und/oder
- wenn mindestens ein Sicherheitsprüfsensor einen Stromsensor umfasst, der dazu ausgestaltet ist, den von dem Batteriesystem oder von mindestens einer Zelle des Batteriesystems produzierten Strom zu messen: Einschätzen, ob der Strom oder das Strommuster, gemessen von mindestens einem Stromsensor, möglicherweise ein sicherheitskritisches Ereignis angibt oder nicht; und/oder
- wenn mindestens ein Sicherheitsprüfsensor einen Isolationssensor umfasst: Einschätzen, ob die von mindestens einem Isolationssensor gemessene Isolation unter einen vordefinierten kritischen Wert fällt oder nicht.

10. Verfahren zum Betreiben eines Batteriesystems (100) nach Anspruch 8 oder 9, wobei Schritt b) kontinuierlich oder innerhalb vordefinierter Zeitintervalle oder bei Auslösung durch vordefinierte Ereignisse wiederholt wird.

11. Batteriepack, umfassend das Batteriesystem nach einem der Ansprüche 1 bis 7.

12. Fahrzeug, umfassend das Batteriesystem nach einem der Ansprüche 1 bis 7 oder den Batteriepack nach Anspruch 11.

## Revendications

1. Système de batterie (100) comprenant :
un empilement comprenant une pluralité de cellules de batterie (10₁, 10₂, ..., 10₁₂ ; 20₁, 20₂, ..., 20₁₈) empilées le long d'un axe de référence virtuel (z) ;
un cadre de bloc comprenant une première plaque d'extrémité (40a) et une deuxième plaque d'extrémité (40b) ;
un ou plusieurs ressorts à fluide (30, 30a, 30b) configurés pour contenir un fluide ;
un ou plusieurs moyens d'ajustement de pression de fluide (12, 12a, 12b) pour ajuster une pression de fluide à l'intérieur de l'au moins un ressort à fluide (30, 30a, 30b) ;
une unité de commande (90) configurée pour commander les un ou plusieurs moyens d'ajustement de pression de fluide (12, 12a, 12b) ;
dans lequel l'empilement est placé entre la première plaque d'extrémité (40a) et la deuxième plaque d'extrémité (40b) ;
dans lequel chacun des un ou plusieurs ressorts à fluide (30, 30a, 30b) est positionné entre la première plaque d'extrémité et la deuxième plaque d'extrémité, et est configuré pour exercer une pression sur au moins l'une des cellules de batterie dans une direction le long de l'axe de référence (z) ;
dans lequel chacun des moyens d'ajustement de pression de fluide (12, 12a, 12b) est relié à un ou plusieurs ressorts à fluide (30, 30a, 30b) ;
dans lequel l'unité de commande (90) est configurée pour recevoir un signal de contrôle de sécurité indiquant une accélération négative en provenance d'au moins un capteur de contrôle de sécurité (60) comprenant un capteur d'accélération configuré pour détecter une accélération négative avec une valeur d'accélération absolue supérieure ou égale à une valeur positive prédéfinie ; et dans lequel l'unité de commande (90) est en outre configurée pour évaluer si un ou plusieurs signaux de contrôle de sécurité reçus, qui indiquent une accélération négative, peuvent indiquer ou non une situation critique pour la sécurité, et pour faire fonctionner, lorsqu'il est évalué que le ou les signaux de contrôle de sécurité indiquant une accélération négative peuvent indiquer une situation critique pour la sécurité, les moyens d'ajustement de pression de fluide (12, 12a, 12b) de telle sorte que la pression de fluide dans les ressorts à fluide (30, 30a, 30b) est diminuée.

2. Système de batterie (100) selon la revendication 1, comprenant en outre au moins un capteur de pression de fluide (14, 14a, 14b) configuré pour mesurer une pression de fluide présente dans au moins l'un des ressorts à fluide ;
dans lequel l'unité de commande est configurée pour recevoir un signal de pression correspondant à la pression mesurée en provenance de chacun des capteurs de pression de fluide (14, 14a, 14b) ; et
dans lequel l'unité de commande est en outre configurée pour commander, en fonction des un ou plusieurs signaux de pression reçus, les un ou plusieurs moyens d'ajustement de pression de fluide (12, 12a, 12b).

3. Système de batterie (100) selon la revendication 2,
dans lequel l'unité de commande est configurée pour détecter, à partir du signal de pression fourni par chacun des capteurs de pression de fluide (14, 14a, 14b), un changement de pression dans le fluide des ressorts à fluide auxquels les capteurs de pression de fluide (14, 14a, 14b) sont reliés ;
dans lequel l'unité de commande est en outre configurée pour commander au moins l'un des moyens d'ajustement de pression de fluide (12, 12a, 12b) de telle sorte que, lors de la détection d'une augmentation de pression par au moins l'un des capteurs de pression de fluide (14, 14a, 14b), le moyen d'ajustement de pression de fluide (12, 12a, 12b) diminue la pression de fluide à l'intérieur des ressorts à fluide (30, 30a, 30b) reliés aux moyens d'ajustement de pression de fluide (12, 12a, 12b) respectifs ; et
dans lequel l'unité de commande est en outre configurée pour commander au moins l'un des moyens d'ajustement de pression de fluide (12, 12a, 12b) de telle sorte que, lors de la détection d'une diminution de pression par au moins l'un des capteurs de pression de fluide (14, 14a, 14b), le moyen d'ajustement de pression de fluide (12, 12a, 12b) augmente la pression de fluide à l'intérieur des ressorts à fluide (30, 30a, 30b) reliés aux moyens d'ajustement de pression de fluide respectifs.

4. Système de batterie (100) selon l'une quelconque des revendications 1 à 3,
dans lequel la première cellule de batterie (10₁, 20₁) de l'empilement est, vue le long de l'axe de référence (z), positionnée à côté de la première plaque d'extrémité (40a) et la dernière cellule de batterie (10₁₂, 20₁₈) de l'empilement est, vue le long de l'axe de référence (z), positionnée à côté de la deuxième plaque d'extrémité (40b) ;
dans lequel un ressort à fluide (30a) est placé entre la première plaque d'extrémité (40a) et la première cellule de batterie (10₁, 20₁) de l'empilement ; et
dans lequel un autre ressort à fluide (30b) est placé entre la deuxième plaque d'extrémité (40b) et la dernière cellule de batterie (10₁₂, 20₁₈) de l'empilement.

5. Système de batterie (100) selon l'une quelconque des revendications 1 à 4, dans lequel les ressorts à fluide (30, 30a, 30b) sont chacun en communication fluidique les uns avec les autres.

6. Système de batterie (100) selon l'une quelconque des revendications 1 à 5, dans lequel au moins l'un des moyens d'ajustement de pression de fluide (12, 12a, 12b) comprend une pompe à vide et/ou une soupape et/ou un compresseur.

7. Système de batterie (100) selon l'une quelconque des revendications 1 à 6,
dans lequel au moins un capteur de contrôle de sécurité comprend un capteur de température configuré pour mesurer la température de l'empilement de cellules de batterie ou pour mesurer la température d'au moins l'une des cellules de batterie comprises dans l'empilement ; et
dans lequel l'unité de commande évalue si la température ou un profil de température mesuré par au moins un capteur de température peut indiquer ou non un événement thermique critique pour la sécurité.

8. Procédé de fonctionnement d'un système de batterie (100) selon l'une quelconque des revendications 1 à 7, comprenant les étapes suivantes :
a) l'ajustement d'une pression dans le fluide d'au moins l'un des ressorts à fluide (30, 30a, 30b) ;
b) le fait de vérifier, au moyen de l'unité de commande, si un signal de contrôle de sécurité a été reçu ou non en provenance d'au moins un capteur de contrôle de sécurité comprenant un capteur d'accélération configuré pour détecter une accélération négative avec une valeur d'accélération absolue supérieure ou égale à une valeur positive prédéfinie ;
c) le fait d'évaluer, au moyen de l'unité de commande, si les signaux de contrôle de sécurité reçus peuvent indiquer ou non une situation critique pour la sécurité ; et
d) le fonctionnement, au moyen de l'unité de commande, lorsqu'il est évalué que le ou les signaux de contrôle de sécurité peuvent indiquer une situation critique pour la sécurité, des moyens d'ajustement de pression de fluide (12, 12a, 12b) de telle sorte que la pression de fluide dans les ressorts à fluide (30, 30a, 30b) est diminuée.

9. Procédé de fonctionnement d'un système de batterie (100) selon la revendication 8, dans lequel l'étape b) comprend :
- si au moins un capteur de contrôle de sécurité comprend un capteur d'accélération : le fait de vérifier si les signaux de contrôle de sécurité reçus en provenance d'au moins l'un des capteurs d'accélération indiquent ou non une accélération négative avec une valeur d'accélération absolue supérieure ou égale à une valeur positive prédéfinie ; et/ou
- si au moins un capteur de contrôle de sécurité comprend un capteur thermique configuré pour mesurer la température de l'empilement de cellules de batterie ou pour mesurer la température d'au moins l'une des cellules de batterie comprises dans l'empilement ; le fait d'évaluer si la température ou un profil de température mesuré par au moins un capteur de température peut indiquer ou non un événement thermique critique pour la sécurité ; et/ou
- si au moins un capteur de contrôle de sécurité comprend un capteur de tension de cellule configuré pour mesurer la tension sur au moins une cellule du système de batterie : le fait d'évaluer si la tension ou un profil de tension mesuré par au moins un capteur de tension de cellule peut indiquer ou non un événement critique pour la sécurité ; et/ou
- si au moins un capteur de contrôle de sécurité comprend un capteur de courant configuré pour mesurer le courant produit par le système de batterie ou au moins par une cellule du système de batterie : le fait d'évaluer si le courant ou un profil de courant mesuré par au moins un capteur de courant peut indiquer ou non un événement critique pour la sécurité ; et/ou
- si au moins un capteur de contrôle de sécurité comprend un capteur d'isolement : le fait d'évaluer si l'isolement mesuré par au moins un capteur d'isolement se situe ou non au-dessous d'une valeur critique prédéfinie.

10. Procédé de fonctionnement d'un système de batterie (100) selon la revendication 8 ou 9, dans lequel l'étape b) est répétée en continu ou à des intervalles de temps prédéfinis ou lorsqu'elle est déclenchée par des événements prédéfinis.

11. Bloc-batterie comprenant le système de batterie selon l'une quelconque des revendications 1 à 7.

12. Véhicule comprenant le système de batterie selon l'une quelconque des revendications 1 à 7 ou le bloc-batterie selon la revendication 11.
